# EUROPEAN PATENT SPECIFICATION

(11) **EP 3 168 180 B1**
(45) Date of publication and mention of the grant of the patent: **27.06.2018**
(21) Application number: 16195769.1
(22) Date of filing: 26.10.2016
(51) Int. Cl.: B65H 54/28

(54) **THREAD-GUIDE DEVICE OF WINDING MACHINE AND RELATED WINDING MACHINE**
FADENFÜHRUNGSVORRICHTUNG EINER WICKELMASCHINE UND ZUGEHÖRIGE WICKELMASCHINE
MACHINE GUIDE-FIL DE MACHINE D'ENROULEMENT ET MACHINE D'ENROULEMENT ASSOCIÉE

(30) Priority: 10.11.2015 IT UB20155420
(43) Date of publication of application: 17.05.2017
(73) Proprietor: Savio Macchine Tessili S.p.A., 33170 Pordenone (IT)
(72) Inventor: VELLUDO, Massimo, I-33170 PORDENONE (IT); BADIALI, Roberto, I-33170 PORDENONE (IT); CATANIA, Patrick, I-33170 PORDENONE (IT)
(74) Representative: Mitola, Marco

(56) References cited:
- EP-A1- 1 209 114
- EP-A1- 2 735 535
- WO-A1-2014/095263
- JP-A- H0 450 542
- US-A1- 2001 046 915

## Description

### FIELD OF APPLICATION

This invention relates to a thread-guide device for winding machine and related winding machine comprising said thread-guide device.

### STATE OF THE ART

As it is known, textile machines for winding thread in a package, i.e., winding machines, use thread-guide systems with reciprocating rectilinear movement that have the advantage of having the thread-guide very near to the surface of the package.

Generally, the scheme is used of a thread-guide connected to a toothed belt, driven by two toothed pulleys, one of which is motorised. The motor imparts a to and fro reciprocating motion to the belt, which transports the thread-guide anchored to it; the motor to which the drive pulley is connected is the low-inertial, high-performance type, and suitable to be used for the realisation of reciprocating motion.

The thread-guide, in turn, engages the thread to be wound on the package by means of an eyelet, generally ceramic, and thus moves the thread from right to left and vice versa; the thread is collected by the package, which is supported by a yarn package arm and rests on a drum. Depending on the embodiments, the package can be pulled by the same drum suitably set in rotation or it can be set in rotation by a motor located on the arm.

As regards the drive pulley of the thread-guide, this is connected directly to the motor axis, so it is guided and held in position by the motor axis and, for the good functionality of the system, it is sufficient that the load of the belt on it does not exceed the design safe load for the motor axis.

The return pulley is instead generally mounted on a bearing applied to a fixed axis.

This bearing is small to reduce the inertia of its moving parts, since the movement is continuously to and from, so with sudden accelerations and decelerations. In other cases the pulley is connected to a rotating axis, which is supported by two small bearings, in which the advantage is a better guide of the pulley but, in contrast, this variant implies a greater overall inertia of the system.

In the case of the single-bearing solution, problems are created of slight oscillations of the median plane M-M of the return pulley 24, quantifiable in about 0.03°-0.17° depending on the degree of precision of the bearings.

These oscillations are caused by the operating play of bearing itself; these oscillations are acceptable when the transmission belt is constituted by a cord, but are not acceptable in the case of transmission by toothed transmission belts because, in the presence of slight oscillations of the pulley, the toothed transmission belt moves transversely on the pulley toothing. This effect, visible both at low frequencies (7 Hz) and high frequencies (20 Hz) of the drive, is deleterious for the life of the transmission belt and the bearing itself: in fact, the lateral movements generate transverse friction and abnormal wear of the belt, determining premature wear.

In the case instead of a pulley connected to an axis rotating on two bearings, the guidance provided by the latter is much better, but the higher inertia due to the overall increase of the masses limits the working frequencies of the system.

Furthermore, in order for the thread-guide to function properly and last as long as possible, it is essential that the transmission belt of the thread-guide always work with the correct tension. This tension is essential to avoid possible slippage if a cord is used; in the case of toothed belts is essential to avoid the teeth of the belt jumping on the pulley to prevent the belt from slipping or being thrown off pulley, to limit ripping of the belt at the motion reversal points, but also to effectively dampen possible vibrations induced by the thread-guide system during its operation. It is clear that, due to wear and ageing, the transmission belt tends to stretch and thus to loosen, exacerbating the above-mentioned problems. It is therefore important that the transmission belt be periodically serviced during its life and, in particular, correctly tensioned. However, this is not performed often, leading to premature breakage of the belt for the reasons described above. In other cases, tensioning is performed by personnel who are unqualified or lacked the tools necessary instrumentation to ensure the correct tensioning of the belt. Also in this case, there is sudden premature breakage of the transmission belt of the thread-guide device caused by excessive slack of the belt or, in some cases of incorrect maintenance, by over-tensioning it.

It follows that in the prior art solutions, transmission belts have an irregular duration and often break suddenly. In the known solutions it is therefore usual to perform corrective maintenance, following the failure of the component, rather than preventative maintenance, to prevent sudden breakage and also to increase its useful life by ensuring the correct operating conditions. A solution according to above described prior art is known by WO 2014/095263 A1.

### PRESENTATION OF THE INVENTION

Therefore, there is a need to solve the drawbacks and limitations mentioned in reference to the prior art.

In particular, the need is felt to ensure the correct operation and longer life of the transmission belt of a thread-guide device for winding machine.

This need is met by a thread-guide device for winding machine according to claim 1.

### DESCRIPTION OF THE DRAWINGS

Further characteristics and advantages of this invention will be more understandable from the following description of its preferred and non-limiting examples of embodiments, in which:

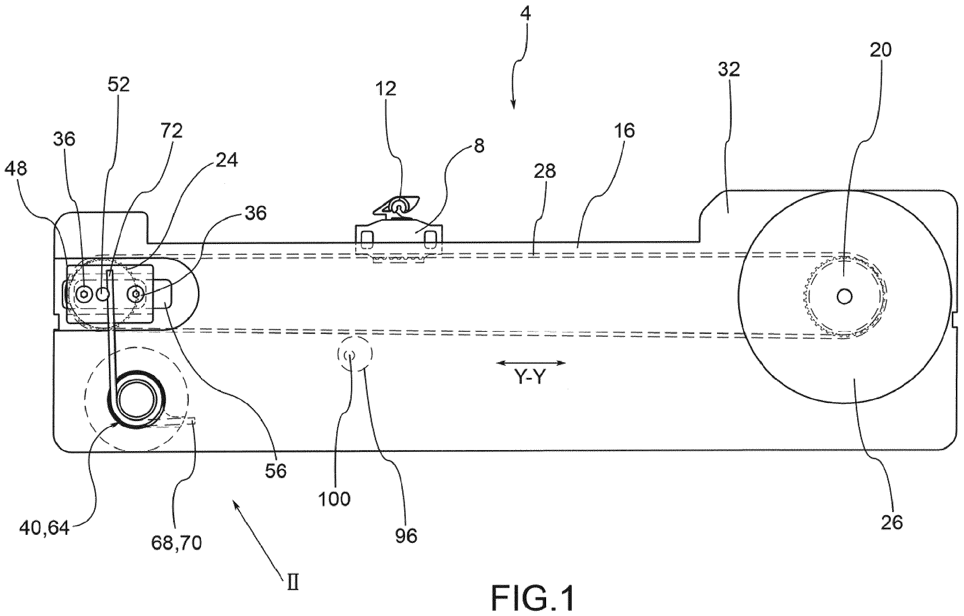

Figure 1 is a front view of a thread-guide device according to an embodiment of this invention;

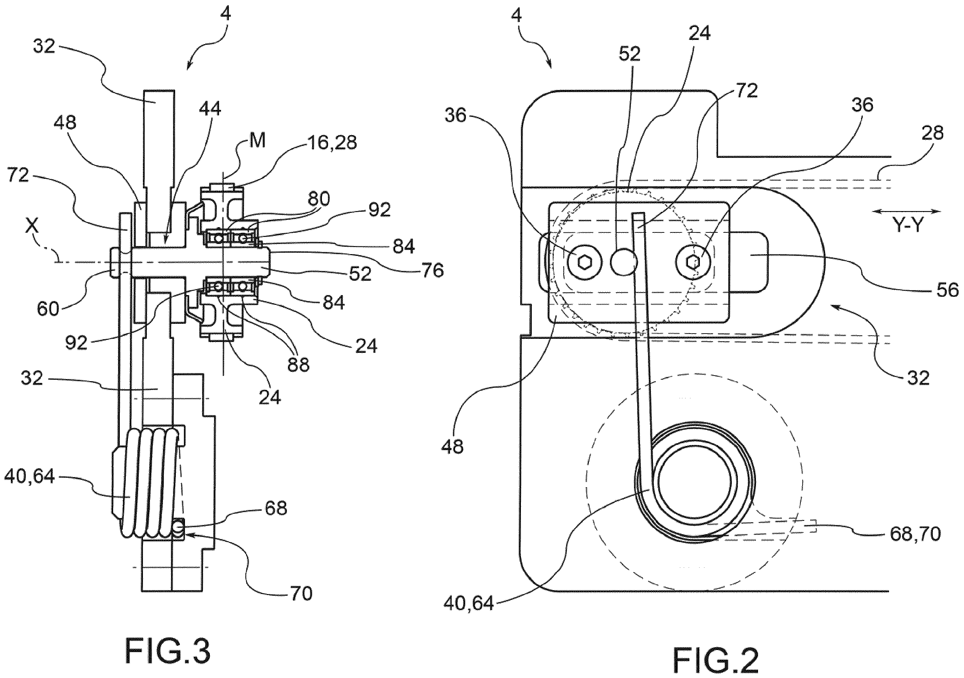

Figure 2 is a perspective view of the enlarged detail II of Figure 1,
Figure 3 is a side view, in partial section, of the thread-guide device of Figure 2, from the side of the arrow III of Figure 2.

The elements, or parts of elements, in common between the embodiments described below will be indicated with the same reference numbers.

### DETAILED DESCRIPTION

With reference to the above figures, reference number 4 globally indicates a thread-guide device for winding machine.

The thread-guide device 4 comprises a slider 8 fitted with an eyelet 12 suitable to engage a yarn of a package, in the known manner.

The thread-guide device 4 also comprises a transmission belt 16 mechanically connected to a drive pulley 20 and a return pulley 24 so as to identify at least one mobile transmission branch 28 with alternating rectilinear motion.

Preferably, the transmission belt 16 is a toothed belt that engages on corresponding teeth formed on the drive pulley 20 and on the return pulley 24.

The slider 8 is rigidly fixed to said mobile transmission branch 28 with alternating rectilinear motion of the transmission belt 16; the drive pulley 20 is operatively connected to a motor 26 for the rotation of the drive pulley 20 around an axial direction X-X in a first and in a second direction of rotation opposite to each other, so as to achieve the reciprocating rectilinear motion of the slider 8, in a transverse direction Y-Y perpendicular to said axial direction X-X.

The motor 26 is preferably a low-inertia, high-performance electric motor.

The drive and return pulleys 20,24 have a cylindrical geometry, axisymmetric with respect to the related rotation axes parallel to each other and to said axial direction X-X.

Advantageously, the return pulley 24 is rotatably supported by a support plate 32 and fixed to this by locking means 36. Said locking means 36 can include screws, pins or similar means of threaded connection.

Between the support plate 32 and the return pulley 24 are interposed elastic pre-load means 40 that, in the unlocking configuration of the locking means 36, move the return pulley 24 away from the drive pulley 20, applying said pre-load to the transmission belt 16.

According to an embodiment of this invention, the return pulley 24 is rotatably supported by a pair of jaws 44,48 facing a support plate 32, wherein at least a first jaw 44 supports a support pin 52 of the return pulley 24. The elastic pre-load means 40 influence said first jaw 44 and the return pulley 24 to move away from the drive pulley 20 so as to pre-load the transmission belt.

The second jaw 48 is fixed to the first jaw 44 and to the support plate 32 by means of locking means 36 suitable to lock, in the locking configuration, the position of the first jaw 44 on the support plate 32, said position being set to the first jaw 44 by the elastic pre-load means 40, in the unlocking configuration of the locking means 36.

According to an embodiment, the support plate 32 comprises a rectilinear guide 56 that receives and guides the first jaw 44 in its movement away from the drive pulley 20 under the thrust of the elastic pre-load means 40.

For example, the first and second jaw 44, 48 are arranged on opposite sides with respect to the support plate 32. In this way, when the locking means 36 are tightened, the first and second jaws 44,48 are compressed against the support plate 32, interposed between said jaws 44,48.

According to an embodiment, the elastic pre-load means 40 are arranged on the side opposite the first jaw 44, so as to interface with a portion of the support pin 52 of the return pulley 24.

For example, the support pin 52 of the drive pulley 24 is integral with the jaw 44 and passes through the second jaw 48; the elastic pre-load means 40 interface with a first projecting portion 60 of the support pin 52, from the side of the second jaw 48.

According to an embodiment, the elastic pre-load means 40 comprise a torsion spring 64 suitable to exert an approximately constant pre-load as its deformation varies. In this way, it is ensured, in the unlocking condition of the locking means 36, that the elastic pre-load means 40 are able to restore the correct pre-load, i.e., the correct traction, to the transmission belt 16.

For example, said torsion spring 64 comprises a first end 68 fixed to a seat 70 of the support plate 32 and a second end 72 resting on the support pin 52 of the return pulley 24.

Preferably, the support pin 52 of the return pulley 24 is fixed with said first jaw 44.

The fact that such a support pin 52 is fixed with the jaw 44, and this is compressed against the jaw 48 and therefore with the support plate 32 provides a considerable rigidity to the pin itself and generally avoids the possibility of flexion of the return pulley 24 under the thrust of the drive belt 16. In other words, it guarantees the perfect perpendicularity between the support pin 52, parallel to the axial direction X-X, and the transmission belt directed along the transverse direction Y-Y.

Preferably, between a second projecting portion 76 of the support pin 52, from the side of the first jaw 44, and the return pulley 24 are interposed two bearings 80 placed side by side axially, parallel to said axial direction X-X.

Preferably, an inner ring 84 of said bearings 80 is keyed onto the support pin 52 of the return pulley 24, fixed with said first jaw 44, and an outer ring 88 of said bearings 80 rotates integrally with the return pulley 24.

This solution helps improve the guidance of the return pulley and therefore ensures the parallelism between the axis of rotation of the return pulley, defined by the support pin 52, and the axial direction X-X.

Between the inner ring 84 and outer ring 88 are interposed rolling friction means such as, for example, balls or rollers.

To not weight down the system, metal Seeger rings are not used and the two bearings 80 placed side by side are permanently connected to the return pulley 24 by gluing the outer rings 88 while the inner rings 84 are free on the support pin 52.

In order to limit possible vibrations of the transmission belt 16, it is possible to provide a vibration limiter 96 mounted eccentrically with respect to an adjustment pin 100 so as to be able to intercept a portion of the transmission belt 16 in the case it vibrates. The vibration limiter 96 can be rotated eccentrically around the adjustment pin 100 so as to approach or move away from a branch of the transmission belt 16 in the event that this were to vibrate. The possible contact between the transmission belt 16 and the vibration limiter damps the vibration.

We will now describe the operation of a thread-guide for winding machine according to this invention.

In particular, the jaws 44, 48 are subject to the thrust F of the elastic pre-load means 40 that, with screws or locking means 36 loosened, ensures an almost constant load on the transmission belt 16.

The load of the elastic pre-load means 40 is transferred to the transmission belt 16 at the time of its mounting and does not exceed a pre-set value so as not to load the belt beyond its pre-set maximum working load of about 15 to 16.5 Newton, with respect of a minimum tensile strength which is about 330 Newton (thus the load is about 5%, in order not to fatigue the transmission belt) .

The purpose is to not permit the system to be loaded more than allowed and, at the same time, to facilitate maintenance use: during operation, the transmission belt 16 and the drive and return pulleys 20,24 are subject to adjustments that generate slight wear mainly on the transmission belt 16, with the result that the initial mounting tension is slightly reduced.

Since, with the passage of time, the transmission belt 16 is subject to slight relaxation and light wear, its tension can decrease, and vibrations of the transmission belt 16 can be triggered.

As seen, said vibrations can be limited by the vibration limiter 96 eccentric on the adjustment pin 100, positioned close to the transmission belt 16 without, however, touching it.

Upon an attempt to trigger vibration, said vibration limiter 96 comes in contact with the transmission belt and limits or entirely extinguishes the oscillation itself.

In any case, to prevent abnormal vibrations of the transmission 16 due to the drop of tension, it is appropriate to also have a system that allows regenerating the initial tension, without committing errors.

This invention makes such adjustment easier: when the fixing screws or locking means 36 of the jaws 44,48 are released, the transmission belt 16 is subject to the force of the spring, which thus allows recovering the light wear of the transmission belt 16 and the return and transmission pulleys 20,24; when the screws are retightened, the transmission belt will be tensioned again to the required values.

The adjustment intervention is therefore limited to:
1) loosening the locking means 36
2) allowing the jaws, in particular the first jaw 44, to move slightly under the almost constant load of the elastic pre-load means 40, thus putting the transmission belt 16 under tension with the load of the spring 40,
3) re-tightening the locking means 36.

As can be appreciated from the description, the thread-guide device according to the invention allows overcoming the drawbacks presented in the prior art.

In particular, this invention allows ensuring the proper guidance of the return pulley of the thread-guide device by limiting the inertia of the pulley/bearing system and avoiding the occurrence of vibrations that would cause unwanted transverse movements of the toothed belt with respect to the return pulley itself.

Furthermore, this invention allows controlling that the tension of the transmission belt does not exceed the defined design values. In fact, the tensioning device always ensures the correct tension of the transmission belt without having to make recourse to special measuring and/or tensioning instruments. Therefore any operator, even unskilled, can, with a simple gesture as described above, restore the correct tension of the drive belt so as to ensure the optimum operation of the thread-guide device, and thus a longer possible life for the transmission belt itself.

It is therefore possible to provide the return pulley a pre-set load, during both mounting and its operational life.

Furthermore, the solution provides for applying two side by side bearings to the return pulley rather than a single one as in the prior art solutions. Said bearings are mounted on a fixed pin, so as to prevent the oscillation of the median plane M-M of the return pulley. In addition, the choice of a size for the two bearings just less than that of the single bearing allows having a lower total inertia with respect to a single bearing, thus increasing the system's ability to work at high frequencies. In detail, if ones changes from a bearing 628/5-2Z of size 6x13x5, of mass 0.0026, to two bearings 628/5-2Z of size 5x11x4 size and total mass of 0.0028, the inertia of the bearings is reduced by about 13%.

Moreover, the first jaw that carries the support pin is robust, and the two side by side bearings serve to keep the return pulley stable so that its median plane M-M remains always perpendicular to the rotation axis during the continuous to and fro motion of the transmission belt. In this way, lateral thrusts are not generated, the transmission belt remains stable in its to and fro motion and wear of the belt/pulley/bearing system is limited.

A person skilled in the art, in order to satisfy contingent and specific needs, may make numerous modifications and variations to the thread-guide devices described above, all however contained within the scope of the invention as defined by the following claims.

## Claims

1. Thread-guide device (4) for winding machine comprising
- a slider (8) fitted with an eyelet (12) suitable to engage a yarn of a package,
- a transmission belt (16) mechanically connected to a drive pulley (20) and a return pulley (24) so as to identify at least one mobile transmission branch (28) with alternating rectilinear motion,
- the slider (8) being rigidly fixed to said mobile transmission branch (28) with alternating rectilinear motion of the transmission belt (16),
- wherein the drive pulley (20) is operatively connected to a motor (26) for the rotation of the drive pulley (20) around an axial direction (X-X) in a first and in a second direction of rotation opposite to each other, so as to achieve the reciprocating rectilinear motion of the slider (8), in a transverse direction (Y-Y) perpendicular to said axial direction (X-X),
wherein
- the return pulley (24) is rotatably supported by a support plate (32) and fixed to this by locking means (36), wherein between the support plate (32) and the return pulley (24) are interposed elastic pre-load means (40) that, in the unlocking configuration of the locking means (36), move the pulley (24) away from the drive pulley (20), applying said pre-load to the transmission belt (16),
**characterized in that**
the return pulley (24) is rotatably supported by a pair of jaws (44,48) facing the support plate (32), wherein at least a first jaw (44) supports a support pin (52) of the return pulley (24),
- wherein the elastic pre-load means (40) influence said first jaw (44) and the return pulley (24) to move away from the drive pulley (20),
- wherein the second jaw (48) is fixed to the first jaw (44) and to the support plate (32) by means of the locking means (36) suitable to lock, in the locking configuration, the position of the first jaw (44) on the support plate (32), said position being set to the first jaw (44) by the elastic pre-load means (40), in the unlocking configuration of the locking means (36),
wherein said elastic pre-load means (40) comprise a torsion spring (64) adapted to exert an approximately constant pre-load regardless of its elastic deformation, wherein the support pin (52) of the return pulley (24) is fixed with the first jaw (44), and wherein between a second projecting portion (76) of the support pin (52), from the side of the first jaw (44), and the return pulley (24) are interposed two bearings (80) placed side by side axially, parallel to said axial direction (X-X).

2. Thread-guide device (4) according to claim 1, wherein the support plate (32) comprises a rectilinear guide (56) that receives and guides the first jaw (44) in its movement away from the drive pulley (20) under the thrust of the elastic pre-load means (40).

3. Thread-guide device (4) according to claim 1 or 2, wherein the first and second jaw (44,48) are arranged on opposite sides with respect to the support plate (32).

4. Thread-guide device (4) according to any of claims 1 to 3, wherein the elastic pre-load means (40) are arranged on the side opposite the first jaw (44), so as to interface with a portion of the support pin (52) of the return pulley (24).

5. Thread-guide device (4) according to any of claims 1 to 4, wherein the support pin (52) of the return pulley (24) is integral with the first jaw (44) and passes through the second jaw (48), the elastic pre-load means (40) interfacing with a first projecting portion (60) of the support pin (52), from the side of the second jaw (48) .

6. Thread-guide device (4) according to any one of previous claims, wherein the torsion spring (64) comprises a first end (68) fixed to a seat (70) of the support plate (32) and a second end (72) resting on a support pin (52) of the return pulley (24).

7. Thread-guide device (4) according to any one of previous claims, wherein an inner ring (84) of said bearings (80) is keyed onto the support pin (52) of the return pulley (24), fixed with said first jaw (44), and an outer ring (88) of said bearings (80) rotates integrally with the return pulley (24), between the inner ring (84) and the outer ring (88) with rolling friction means (92) being interposed.

8. Thread-guide device (4) according to any of the preceding claims, comprising a vibration limiter (96) mounted eccentrically with respect to an adjustment pin (100) so as to be able to intercept a portion of the transmission belt (16) in the case it vibrates.

9. Winding machine comprising a thread-guide device (4) according to any of the preceding claims.

## Patentansprüche

1. Fadenführungsvorrichtung (4) für eine Wickelmaschine, umfassend
- einen Schieber (8), welcher mit einer Öse (12) ausgestattet ist, welche dazu geeignet ist, mit einem Garn einer Verpackung in Eingriff zu treten,
- einen Übertragungsriemen (16), welcher mechanisch mit einer Antriebscheibe (20) und einer Umlenkscheibe (24) verbunden ist, um wenigstens einen beweglichen Übertragungszweig (28) mit wechselnder geradliniger Bewegung zu identifizieren,
- wobei der Schieber (8) starr an dem beweglichen Übertragungszweig (28) mit wechselnder geradliniger Bewegung des Übertragungsriemens (16) fixiert ist;
- wobei die Antriebsscheibe (20) betriebsmäßig mit einem Motor (26) für die Drehung der Antriebsscheibe (20) um eine Axialrichtung (X-X) in einer ersten und in einer zweiten Drehrichtung verbunden ist, welche einander entgegengesetzt sind, um die sich hin- und herbewegende, gradlinige Bewegung des Schiebers (8) in einer Querrichtung (Y-Y) zu erzielen, welche lotrecht zu der Axialrichtung (X-X) ist,
wobei
- die Umlenkscheibe (24) durch eine Halterungsplatte (32) drehbar gehaltert und an dieser durch Verriegelungsmittel (36) fixiert ist, wobei zwischen der Halterungsplatte (32) und der Umlenkscheibe (24) elastische Vorspannmittel (40) eingefügt sind, die in der entriegelten Konfiguration der Verriegelungsmittel (36) die Scheibe (24) weg von der Antriebsscheibe (20) bewegen, wobei die Vorspannung auf den Übertragungsriemen (16) aufgebracht wird,
**dadurch gekennzeichnet, dass**
die Umlenkscheibe (24) durch ein Paar von Backen (44,48) drehbar gehaltert ist, welche der Halterungsplatte (32) zugewandt sind, wobei wenigstens eine erste Backe (44) einen Halterungsstift (52) der Umlenkscheibe (24) haltert,
- wobei die elastischen Vorspannmittel (40) die erste Backe (44) und die Umlenkscheibe (24) so beeinflussen, dass sie sich weg von der Antriebsscheibe (20) bewegen,
- wobei die zweite Backe (48) an der ersten Backe (44) und an der Halterungsplatte (32) mittels der Verriegelungsmittel (36) fixiert ist, welche dazu geeignet sind, in der verriegelten Konfiguration die Position der ersten Backe (44) an der Halterungsplatte (32) zu verriegeln, wobei die Position durch die elastischen Vorspannmittel (40) in der entriegelten Konfiguration der Verriegelungsmittel (36) auf die erste Backe (44) eingestellt ist,
wobei die elastischen Vorspannmittel (40) eine Torsionsfeder (64) umfassen, welche dazu eingerichtet ist, eine näherungsweise konstante Vorspannung ungeachtet seiner elastischen Deformation auszuüben,
wobei der Halterungsstift (52) der Umlenkscheibe (24) mit der ersten Backe (44) fixiert ist und wobei zwischen einem zweiten Vorsprungsabschnitt (76) des Halterungsstifts (52) von der Seite der ersten Backe (44) und der Umlenkscheibe (24) zwei Lager (80) eingefügt sind, welche axial nebeneinander, parallel zu der Axialrichtung (X-X) platziert sind.

2. Fadenführungsvorrichtung (4) nach Anspruch 1, wobei die Halterungsplatte (32) eine gradlinige Führung (56) umfasst, welche die erste Backe (44) in dessen Bewegung weg von der Antriebsscheibe (20) unter der Druckkraft der elastischen Vorspannmittel (40) aufnimmt und führt.

3. Fadenführungsvorrichtung (4) nach Anspruch 1 oder 2, wobei die erste und die zweite Backe (44, 48) in Bezug auf die Halterungsplatte (32) an entgegengesetzten Seiten angeordnet sind.

4. Fadenführungsvorrichtung (4) nach einem der Ansprüche 1 bis 3, wobei die elastischen Vorspannmittel (40) an der Seite angeordnet sind, welche der ersten Backe (44) gegenüberliegt, so dass sie über eine Schnittstelle mit einem Abschnitt des Halterungsstifts (52) der Umlenkscheibe (24) verbunden sind.

5. Fadenführungsvorrichtung (4) nach einem der Ansprüche 1 bis 4, wobei der Halterungsstift (52) der Umlenkscheibe (24) integral mit der ersten Backe (44) ist und die zweite Backe (48) durchtritt, wobei die elastischen Vorspannmittel (40) über eine Schnittstelle mit einem ersten Vorsprungsabschnitt (60) des Halterungsstifts (52) von der Seite der zweiten Backe (48) verbunden sind.

6. Fadenführungsvorrichtung (4) nach einem der vorhergehenden Ansprüche, wobei die Torsionsfeder (64) ein erstes Ende (68), welches an einem Sitz (70) der Halterungsplatte (32) fixiert ist, und ein zweites Ende (72) umfasst, welches an einem Halterungsstift (52) der Umlenkscheibe (24) anliegt.

7. Fadenführungsvorrichtung (4) nach einem der vorhergehenden Ansprüche, wobei ein Innenring (84) der Lager (80) auf den Halterungsstift (52) der Umlenkscheibe (24) aufgekeilt ist, mit der ersten Backe (44) fixiert ist und sich ein Außenring (88) der Lager (80) integral mit der Umlenkscheibe (24) dreht, wobei zwischen dem Innenring (84) und dem Außenring (88) Rollreibungsmittel (92) eingefügt sind.

8. Fadenführungsvorrichtung (4) nach einem der vorhergehenden Ansprüche, umfassend einen Vibrationsbegrenzer (96), welcher in Bezug auf einen Einstellungsstift (100) exzentrisch montiert ist, um dazu in der Lage zu sein, einen Abschnitt des Übertragungsriemens (16) in dem Fall abzufangen, in dem er vibriert.

9. Wickelmaschine, umfassend eine Fadenführungsvorrichtung (4) nach einem der vorhergehenden Ansprüche.

## Revendications

1. Dispositif guide-fil (4) pour machine d'enroulement comprenant
- un curseur (8) équipé d'un oeillet (12) approprié pour engager un fil d'une bobine,
- une courroie de transmission (16) mécaniquement reliée à une poulie d'entraînement (20) et une poulie de retour (24) de manière à identifier au moins une branche de transmission mobile (28) avec un mouvement rectiligne alternatif,
- le curseur (8) étant solidarisé à ladite branche de transmission mobile (28) avec un mouvement rectiligne alternatif de la courroie de transmission (16),
- dans lequel la poulie d'entraînement (20) est fonctionnellement reliée à un moteur (26) pour la rotation de la poulie d'entraînement (20) autour d'une direction axiale (X-X) dans une première et dans une seconde direction de rotation opposées entre elles, de manière à obtenir le mouvement rectiligne alternatif du curseur (8), dans une direction transversale (Y-Y) perpendiculaire à ladite direction axiale (X-X),
dans lequel
- la poulie de retour (24) est supportée de manière rotative par une plaque de support (32) et fixée à celle-ci par un moyen de verrouillage (36), dans lequel entre la plaque de support (32) et la poulie de retour (24) est interposé un moyen de pré-charge élastique (40) qui, dans la configuration de déverrouillage du moyen de verrouillage (36), déplace la poulie (24) loin de la poulie d'entraînement (20), appliquant ladite pré-charge à la courroie de transmission (16),
**caractérisé en ce que**
la poulie de retour (24) est supportée de manière rotative par une paire de mâchoires (44, 48) faisant face à la plaque de support (32), dans lequel au moins une première mâchoire (44) supporte une tige de support (52) de la poulie de retour (24),
- dans lequel le moyen de pré-charge élastique (40) influence ladite première mâchoire (44) et la poulie de retour (24) pour les déplacer loin de la poulie d'entraînement (20),
- dans lequel la seconde mâchoire (48) est fixée à la première mâchoire (44) et à la plaque de support (32) à l'aide du moyen de verrouillage (36) approprié pour verrouiller, dans la configuration de verrouillage, la position de la première mâchoire (44) sur la plaque de support (32), ladite position étant réglée sur la première mâchoire (44) par le moyen de pré-charge élastique (40), dans la configuration de déverrouillage du moyen de verrouillage (36),
dans lequel ledit moyen de pré-charge élastique (40) comprend un ressort de torsion (64) adapté pour exercer une pré-charge approximativement constante quelle que soit sa déformation élastique,
dans lequel la tige de support (52) de la poulie de retour (24) est fixée avec la première mâchoire (44), et dans lequel entre une seconde portion saillante (76) de la tige de support (52), depuis le côté de la première mâchoire (44), et la poulie de retour (24) sont interposés deux paliers (80) placés côte à côte axialement, parallèlement à ladite direction axiale (X-X).

2. Dispositif guide-fil (4) selon la revendication 1, dans lequel la plaque de support (32) comprend un guide rectiligne (56) qui reçoit et guide la première mâchoire (44) dans son déplacement loin de la poulie d'entraînement (20) sous la poussée du moyen de pré-charge élastique (40).

3. Dispositif guide-fil (4) selon la revendication 1 ou 2, dans lequel les première et deuxième mâchoires (44, 48) sont agencées sur des côtés opposés par rapport à la plaque de support (32).

4. Dispositif guide-fil (4) selon l'une quelconque des revendications 1 à 3, dans lequel le moyen de pré-charge élastique (40) est agencé sur le côté opposé à la première mâchoire (44), de manière à faire l'interface avec une portion de la tige de support (52) de la poulie de retour (24).

5. Dispositif guide-fil (4) selon l'une quelconque des revendications 1 à 4, dans lequel la tige de support (52) de la poulie de retour (24) fait corps avec la première mâchoire (44) et passe à travers la seconde mâchoire (48), le moyen de pré-charge élastique (40) faisant l'interface avec une première portion saillante (60) de la tige de support (52), depuis le côté de la seconde mâchoire (48).

6. Dispositif guide-fil (4) selon l'une quelconque des revendications précédentes, dans lequel le ressort de torsion (64) comprend une première extrémité (68) fixée à un siège (70) de la plaque de support (32) et une seconde extrémité (72) reposant sur une tige de support (52) de la poulie de retour (24).

7. Dispositif guide-fil (4) selon l'une quelconque des revendications précédentes, dans lequel une bague intérieure (84) desdits paliers (80) est clavetée sur la tige de support (52) de la poulie de retour (24), fixée avec ladite première mâchoire (44), et une bague extérieure (88) desdits paliers (80) tourne d'un seul tenant avec la poulie de retour (24), entre la bague intérieure (84) et la bague extérieure (88) étant interposé un moyen de frottement au roulement (92).

8. Dispositif guide-fil (4) selon l'une quelconque des revendications précédentes, comprenant un limiteur de vibrations (96) monté de manière excentrique par rapport à une tige d'ajustement (100) de manière à pouvoir intercepter une portion de la courroie de transmission (16) dans le cas où elle vibre.

9. Machine d'enroulement comprenant un dispositif guide-fil (4) selon l'une quelconque des revendications précédentes.
